# EUROPEAN PATENT APPLICATION

(11) **EP 4 163 591 A1**
(43) Date of publication of application: **12.04.2023**
(21) Application number: 21817369.8
(22) Date of filing: 25.02.2021
(51) Int. Cl.: G01C 15/00

(54) **LASER MARKING TOOL**

(30) Priority: 04.06.2020 CN 202010498848; 04.06.2020 CN 202021003446 U
(71) Applicant: Changzhou Huada Kejie Opto-Electro Instrument Co., Ltd., Changzhou, Jiangsu 213023 (CN)
(72) Inventor: ZHANG, Ou, hangzhou, Jiangsu 213023 (CN); CHEN, Cheng, hangzhou, Jiangsu 213023 (CN); ZHAO, Yue, hangzhou, Jiangsu 213023 (CN)
(74) Representative: Lambsdorff & Lange Patentanwälte Partnerschaft mbB
(86) International application number: PCT/CN2021/077822
(87) International publication number: WO 2021/244073

(57) **Abstract**

The present disclosure provides a laser line marking tool, the laser line marking tool includes a laser module, a first shell, a second shell and a window cover component, the laser module is disposed in a holding space formed by the assembly and joint of the first shell, the second shell and the window cover component, the laser light emitted from the laser module shoots out through the window cover component; the laser line marking tool further includes a first sealing element, the first sealing element comprises an one-piece first connecting section and an one-piece second connecting section, the first connecting section is clamped between the assembly joint surface of the first shell and the second shell and extends in the direction of its extension, the second connecting section is clamped between the window cover component and the assembly joint surface of the first shell and the second shell, and the second connecting section extends along the extension direction. After adopting the above technical solution, the laser line marking tool can achieve good sealing and protection level improvement.

## Description

### TECHNICAL FIELD

The disclosure relates to the technical field of laser instrument, and in particular to a laser line marking tool.

### BACKGROUND

Existing laser line projecting tools, such as laser demarcation devices, in particular laser demarcation devices with 360-degree laser line modules, such as laser demarcation devices with both horizontal and vertical modules, due to unavoidable design or manufacturing factors, the shell closing cover (upper and lower shell closing cover or left and right shell closing cover) breaks when passing through the sealing ring at the window cover, thus reducing the overall IP level of the laser demarcation devices, especially the waterproof level is difficult to exceed IP4 level.

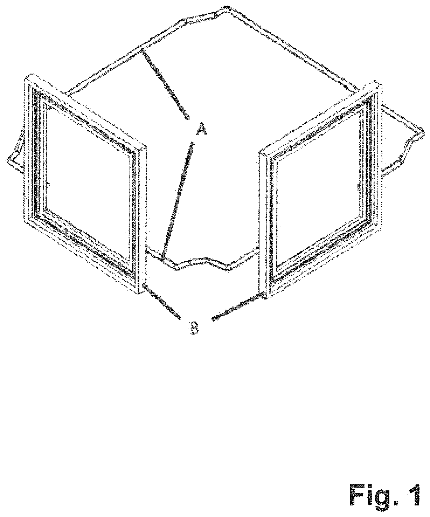

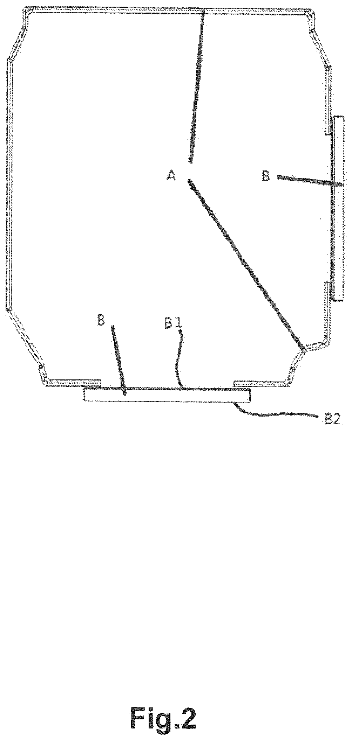

See accompanying Fig. 1 and Fig. 2 for the schematic diagram of the sealing element at the upper and lower shell closing cover of the laser demarcation devices in the prior art, the assembly joint surface of the upper shell and the assembly joint surface of the lower shell are sealed by sealing element A, while the assembly joint surface of the upper shell and the window cover and the assembly joint surface of the lower shell and the window cover are sealed by sealing element B, there is a certain space dislocation between sealing element A and B(no direct contact), sealing element B relies on two surfaces B1 and B2 to achieve closure by force deformation. But it is difficult to achieve the closure between A and B parts, resulting in the overall IP level of the line projecting devices is not high, especially the waterproof level is difficult to exceed IP4 level.

Therefore, it is necessary to develop a kind of laser line marking tool with good sealing performance and high protection level.

### SUMMARY

To overcome the aforementioned technical defects, the objective of the present disclosure is to provide a laser line marking tool with good sealing performance and high protection level.

The present disclosure discloses a laser line marking tool, the laser line marking tool includes a laser module, a first shell, a second shell and a window cover component, the laser module is located in the holding space formed by the assembly and joint of the first shell, the second shell and the window cover component, and the laser light emitted from the laser module shoots out through the window cover component.

The laser line marking tool also includes a first sealing element, the first sealing element comprises an one-piece first connecting section and an one-piece second connecting section, the first connecting section is clamped between the assembly joint surface of the first shell and the second shell, and extends in the direction of its extension, the second connecting section is clamped between the window cover component and the assembly joint surface of the first shell and the second shell, and extends in the direction of its extension, the first sealing element is used to form a seal at the assembly joint surface of the first shell, the second shell and the window cover component.

Preferably, the first shell and the second shell are provided with a hollow area at a position corresponding to the window cover component, the first assembly joint surface of the first shell and the first assembly joint surface of the second shell are connected to the hollow area;
the side of the window cover component toward the first shell and the second shell comprises a flat part, a projecting part and a hollow part;
the flat part surrounds the projecting part;
the projecting part protrudes from the flat part and matches the shape of the hollow area, the projecting part extends into the hollow area when the window cover component is assembled and joined with the first shell and the second shell, and the second connecting section is clamped between the projecting part and the first shell and between the projecting part and the second shell;
the hollow part is located in the middle of the projecting part.

Preferably, the second connecting section comprises a first connecting part and a second connecting part;
the first connection part is located between the projecting part and the assembly joint surface of the first shell and the second shell and extends in the direction of its extension;
the second connecting part protrudes from the first connecting part and is located on the side of the first connecting part facing the flat part, the second connecting part extends synchronously in the direction of extension of the first connecting part.

Preferably, the laser line marking tool further includes a second sealing element; the second sealing element is arranged around the projecting part and is located between
the flat part and the first shell and the second shell;
the side of the second connecting part which is located away from the first connecting part rests against the second sealing element.

Preferably, a first groove matching the shape of the first connecting section is provided on the assembly
joint surface of the first shell and the second shell;
   and/or ;
a second groove matching the shape of the second connecting section is provided on the assembly joint surface of the first shell and the second shell together with the window cover component.

Preferably, the first shell and the second shell are fixedly connected by screws;
the first connecting section is provided with a fixing part, the fixing part is provided with a through hole matched with the screw and for the screw to pass through.
Preferably, the material of the first sealing element is rubber.

Preferably, the laser module comprises a pendulum and a laser tube;
the pendulum is fixedly provided between the first shell and the second shell, the laser tube extends from the pendulum into the window cover component;
the laser tube is provided with a laser light source and a cone prism, the laser light source irradiates vertically on the cone prism to form a 360-degree laser line and shoots out through the window cover component.

Preferably, the laser line marking tool is a laser demarcation device.

With the adoption of the above technical solutions, the following beneficial effects are achieved compared to the prior art:
1. The overall sealing between the assembly joint surfaces of covers of the laser line marking tool and between the assembly joint surfaces of the covers and the assembly joint surface of the window cover is achieved by an one-piece formed first sealing element, which significantly improves the overall IP rating of the laser line marking tool;
2. The second connecting section of the first sealing element corresponding to the sealing of the window cover and the shells comprises a first connecting part and a second connecting part, the sealing of the shell and the window cover is achieved twice by the first connecting part and the second connecting part.

### DESCRIPTION OF DRAWINGS

Fig. 1 is a three-dimensional view of a sealing element at the upper and lower shell closing covers of a laser demarcation devices in the prior art.
Fig. 2 is a top view of the sealing element in Fig. 1.
Fig. 3 is a structure schematic diagram of the laser line marking tool in an embodiment of the present disclosure (the second shell and part of the window cover are not shown).
Fig. 4 is a structural schematic diagram of the laser line marking tool in an embodiment of the present disclosure (the first shell and part of the window cover are not shown).
Fig. 5 is a structural schematic diagram of the first sealing element of the laser line marking tool in an embodiment of the present disclosure.
Fig. 6 is a structural schematic diagram of the second connecting part of the first sealing element in Fig. 5.
Fig. 7 is a structural schematic diagram of the window cover component of the laser line marking tool in an embodiment of the present disclosure.
Fig. 8 is a cross-sectional view of the window cover component in Fig. 7.
Fig. 9 is a cross-sectional view of the assembly joint of the first shell and the window cover of the laser line marking tool in an embodiment of the present disclosure.

### SPECIFIC IMPLEMENTATIONS

Hereinafter the advantages of the present disclosure will be further described in conjunction with the accompanying drawings and specific embodiments.

Exemplary embodiments are described in detail here and are represented in the accompanying figures. Where the following descriptions refer to accompanying drawings, the same numbers in different accompanying drawings indicate the same or similar element, unless otherwise indicated. The embodiments described in the following exemplary embodiments do not represent all embodiments consistent with this disclosure. Rather, they are merely examples of devices and methods which are consistent with those detailed in the attached claims and with some aspects of this disclosure.

Terms used in this disclosure are intended solely to describe specific embodiments and are not intended to limit this disclosure. The singular form of "one", "said" and "that" used in this disclosure and attached claims are also intended to include the majority form, unless the context clearly indicates otherwise. It should also be understood that the terms "and/or" used in this article refer to and including any or all possible combinations of one or more related listed items.

It should be understood that although the terms I, II, III, etc. may be used in this disclosure to describe various information, such information shall not be limited to these terms. These terms are used only to distinguish the same type of information from one another. For example, without leaving the scope of this disclosure, the first information may also be called the second information, and similarly the second information may be called the first information. Depending on the context, the word "if" used here can be interpreted as "in... "or" when... "or" in response to certainty ".

In the description of the disclosure, it should be understood that the terms "longitudinal", "transverse", "up", "down", "front", "back", "left", "right", "vertical", "horizontal", "top", "bottom", "inside", "outside", etc. indicating orientation or positional relationships are based on the orientation or positional relationships shown in the accompanying drawings and are intended only to facilitate the description of the disclosure and to simplify the description, and are not intended to indicate or imply that the devices or elements referred to must have a particular orientation and be constructed and operated in a particular orientation, therefore, it cannot be construed as a limitation of the present disclosure.

In the description of the disclosure, unless otherwise specified and limited, it should be noted that the terms "installation", "connection", "joint" should be understood in a broad sense, for example, it can be a mechanical or electrical connection, it can be an internal connection between two elements, it can be directly connected or indirectly connected through an intermediate medium, and the specific meaning of the above terms can be understood on a case-by-case basis by a person of ordinary skill in the art.

In the subsequent description, suffixes such as "module", "part" or "unit" are used to denote components only for the purpose of facilitating the description of the disclosure and have no specific meaning in themselves, they has no specific meanings in themselves. Thus, the terms "module" and "part" may be used interchangeably.

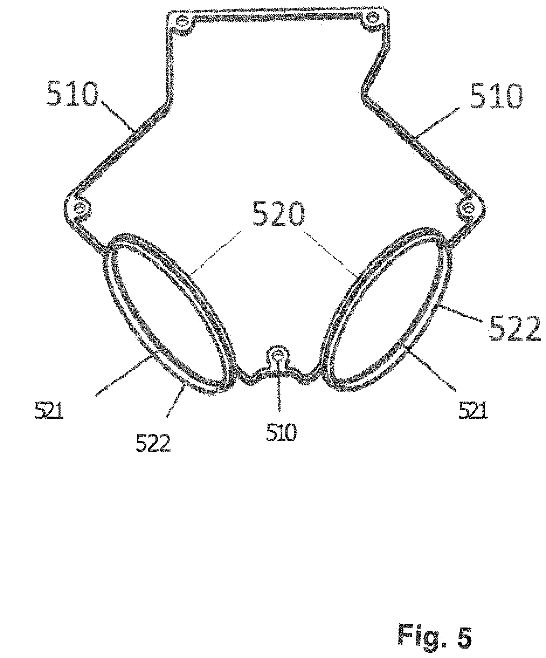

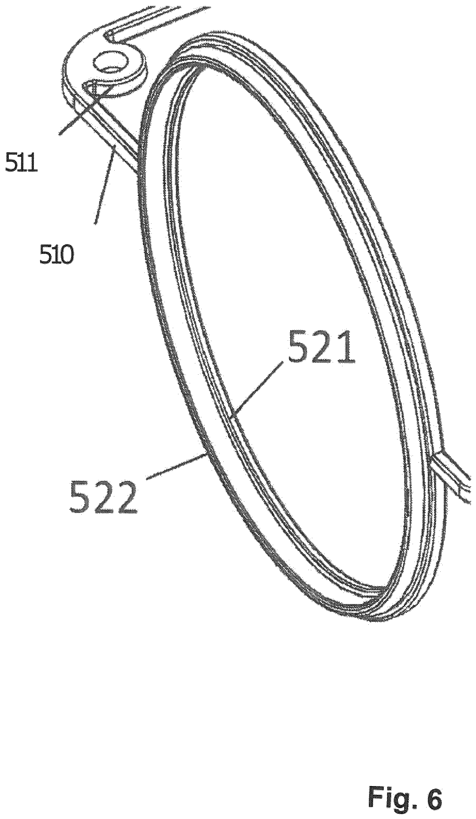

Referring to Figs. 1-9, a laser line marking tool is provided for the present disclosure, the laser line marking tool includes a laser module 100, a first shell 200, a second shell 300, a window cover component 400 and a first sealing element 600.

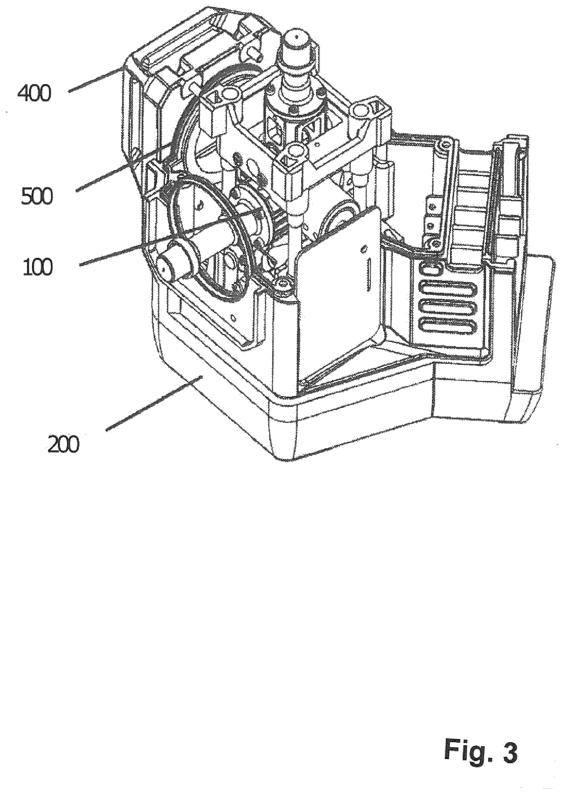

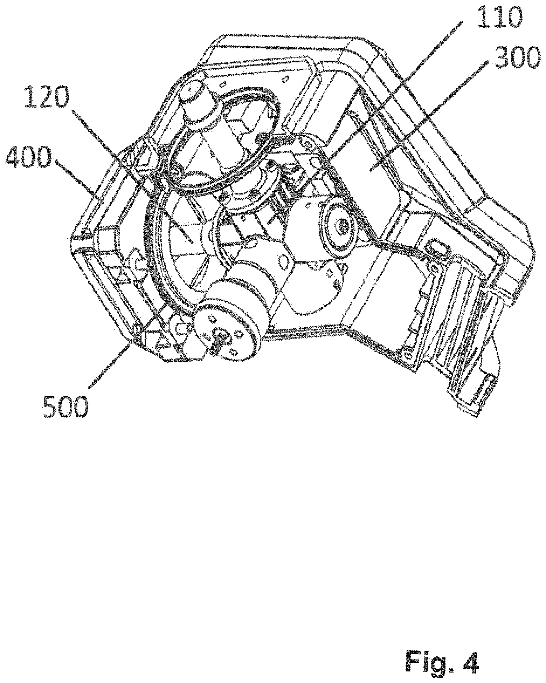

The first shell 200, the second shell 300 and the window cover component 400 are assembled and joined to form a holding space. Referring to Figs. 3 and 4, in this embodiment, the first shell 200 above and second shell 300 below are assembled and combined, there are three window cover components 400, two of which can be disassembled and connected to the assembly joint surface of the first shell 200 and the assembly joint surface of the second shell 300, and one of which is separately located on the second shell 300 (not shown in the figure).

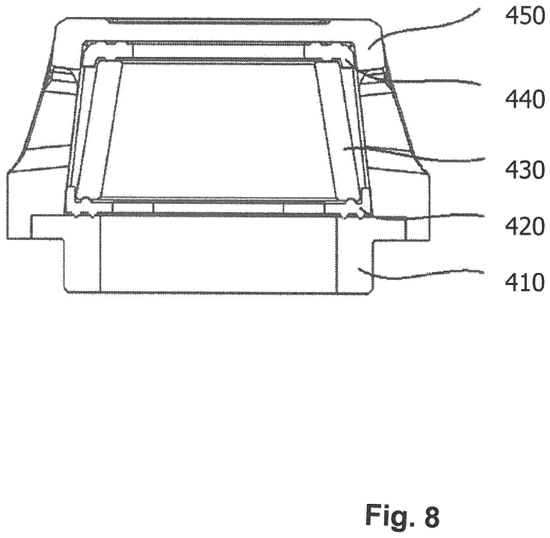

Referring to the accompanying Fig. 8, in this embodiment, the window cover component 400 comprises a window cover shell 450, an upper sealing gasket 440, a glass window 430, a lower sealing gasket 420, and a pressure plate 410 provided in sequence. The window cover shell 450 and the pressure plate 410 are fixedly connected to hold the upper sealing gasket 440, the glass window 430, and the lower sealing gasket 420 between them, the window cover shell 450 is provided with a hollow area on the position corresponding to the glass window 430, there is a holding space between the glass windows 430, and the lower sealing gasket 420 and the pressure plate 410 are provided with a hollow part connecting the holding space between the glass windows 430.

The laser module 100 is located in the holding space formed by the assembly and joint of the first shell 200, the second shell 300 and the window cover component 400. The laser module 100 includes a pendulum 110 and a laser tube 120. The pendulum 110 is fixedly provided between the first shell 200 and the second shell 200, and the laser tube 120 extends from the pendulum 110 into the window cover component 400. The laser tube 120 is provided with a laser light source and a cone prism, and the light from the laser light source is converged and irradiates vertically on the cone prism to form a 360-degree laser line, and shoots out through the glass window 430 of the window cover component 400. In this embodiment, the light emitted outwards through the 3 window cover components 400 forms at least 3 mutually perpendicular laser lines on the target object. The first sealing element 500 comprises an one-piece first connecting section 510 and an one-piece second connecting section 520. The first connecting section 510 is clamped between the assembly joint surface of the first shell 200 and the assembly joint surface of the second shell 300 and extends in the direction of its extension (of the assembly joint surface of the first shell 200 and the second shell 300) to achieve a seal at the assembly joint of the first shell 200 and the second shell 300. The second connecting section 520 is clamped between the window cover component 400 and the assembly joint surface of the first shell 200 and the second shell 300 and extends in the direction of its (the assembly joint surface of window cover component 400 with the first shell 200, and assembly joint surface of window cover component 400 with the second shell 300) extension. Here the window cover component 400 refers to the window cover at the assembly joint surface of the first shell 200 and at the assembly joint surface of the second shell 300, and not to the window cover separately fixedly connected to the second shell 300 (not shown in the figures). Referring to the accompanying Fig. 3, the upper portion of the second connecting section 520 is located between the second shell 300 and the window cover component 400, and the lower portion of the second connecting section 520 is located between the first shell 200 and the window cover component 400. The first sealing element 500 is used to form a seal at the assembly joint surface of the first shell 200 with the window cover component 400 and at the assembly joint surface of the second shell 300 with the window cover component 400. The first connecting section 510 and the second connecting section 520 are provided vertically.

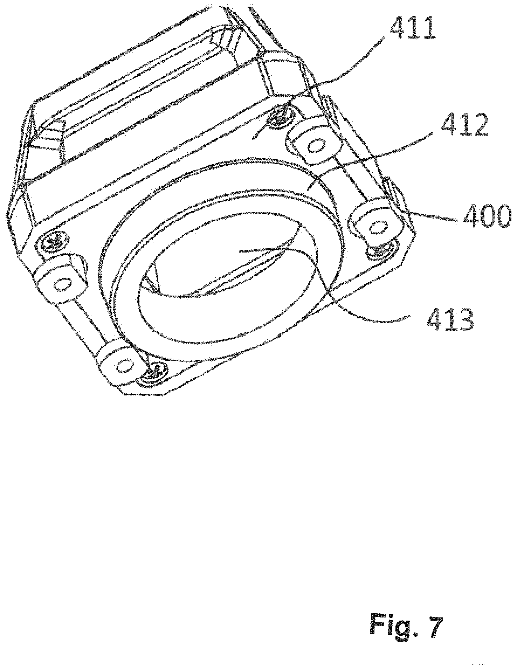

More specifically, the first shell 200 and the second shell 300 are provided with hollow areas corresponding to the window cover component 400, in this embodiment, the hollow areas on both the first shell 200 and the second shell 300 are semicircular hollow areas in two directions perpendicular to each other, after the first shell 200 and the second shell 300 are assembled and combined, the semi-circular hollow area is assembled into the circular hollow area in two directions perpendicular to each other, and the circular hollow area is the channel 400 of the laser tube 120 into the window cover component. The first assembly joint surface of the first shell 200 and the first assembly joint surface of the second shell 300 are connected to the hollow area. Referring to accompanying Fig. 7, the side of the window cover component 400 toward the first shell and the second shell includes a flat part 411, a projecting part 412 and a hollow part 413. The flat part 411 surrounds the projecting part412; the projecting part 412 protrudes from the flat part 411 and matches the shape of the hollow area, the projecting part 412 extends into the hollow area when the window cover component 400 is assembled and joined with the first shell 200 and the second shell 300, the second connecting section 500 is clamped between the projecting part 412 and the first shell 200 and between the projecting part 412 and the second shell 300, to achieve a seal at the assembly joint of the window cover component 400 with the first shell 200 and at the assembly joint of the window cover component 400 with the second shell 300. The hollow section 413 is located in the middle of the projecting part 412, and the outer diameter of the hollow part 413 is larger than the outer diameter of the laser tube 120, so that the laser tube 120 can enter the inside of the window cover component 400 through the hollow part 413.

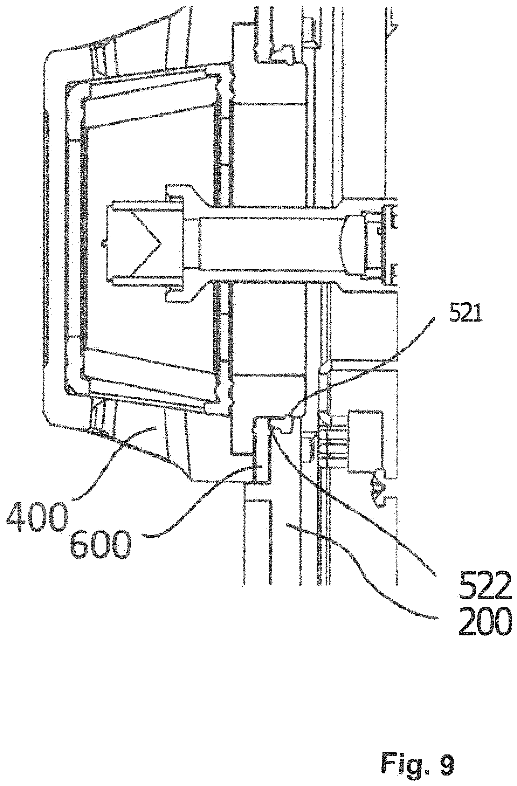

Further, the second connecting section 520 comprises a first connecting part 521 and a second connecting part 522; the first connecting part 521 is located between the projecting part 412 and the assembly joint surface of the first shell 200 and the second shell 300 and extends in the direction of its extension; the second connecting part 522 protrudes from the first connecting part 521 and is located on the side of the first connecting part 521 facing the flat part 411, the second connecting part extends synchronously along the direction of extension of the first connecting part 521. Referring to the accompanying Fig. 9, the laser line marking tool further includes a second sealing element 600, the second sealing element 600 is disposed around the projecting part 412 and is located between the plat part 411 and the first shell 200 and the second shell 300; the side of the second connecting part 522 that rests against the second sealing element 600 is away from the side of the first connecting part 521. The second sealing element 600 and the second connecting part 522 further seal the assembly and joint of the window cover component 400 and the assembly joint of the first shell 200 and the second shell 300 and improve its sealing effect. In some embodiments, the second sealing element 600 can also be left out, so that the flat part 411 of the window cover component 400 fits directly against the outer surface of the first shell 200 and the second shell 300, so that the second connecting part 522 is away from the side of the first connecting part 521 and rests directly against the flat part.

Further, in order to facilitate the installation and positioning of the first sealing element 500, a first groove matching the shape of the first connecting section 510 is provided on the assembly joint surface of the first shell 200 and the second shell 300, the first groove may be separately arranged on the first shell 200 or the second shell 300 or be arranged on the first shell 200 and the second shell 300 at the same time. And/or, the assembly joint surface of the first shell 200 and the assembly joint surface of the second shell 300 and the assembly joint surface of the window cover component 400 are provided with a second groove matching the shape of the second connecting section 520. Further, the first shell 200 and the second shell 300 are fixedly connected by screws, and the first connecting section 510 is provided with a fixing part 511, and the fixing part 511 is provided with a through hole matching the screws and for the screws to pass through. The first shell and the second shell are firmly connected by means of the screws and the first sealing element 500 is compressed.

Further, the first sealing element is made of rubber, preferably silicone rubber, generally about Shore A50 hardness.

For the laser line marking tool of this embodiment, the upper and lower shells are assembled and joined together, and the assembly joint surfaces of its shells are horizontal and pass through the two window cover components. For the assembly and joint of the left shell and right shell, the assembly joint surface of the shells is vertical and passes through a laser line marking tool at a window cover component, the technical solution of this application is also applicable, and the first sealing element of this application can also be used for sealing, the principal is similar to this application and will not be repeated here.

The laser line marking tool in this application can achieve good sealing at the assembly joint of the shells and the window cover components through an one-piece first sealing element, so as to improve the overall IP level of the machine and make the machine meet the waterproof requirement of IP5 at least.

It should be noted that the embodiments of the present disclosure are of better embodiments and are not in any way limiting the present disclosure, and may be changed or modified to equivalent valid embodiments by any technical person skilled in the art using the technical content revealed above, any modification or equivalent changes and modifications made to the above embodiments based on the technical substance of the present disclosure remain within the scope of the technical solution of the present disclosure as long as they do not depart from the content of the technical solution of the present disclosure.

## Claims

1. A laser line marking tool, the laser line marking tool includes a laser module, a first shell, a second shell and a window cover component, the laser module is located in a holding space formed by the assembly and joint of the first shell, second shell and window cover component, the laser light emitted from the laser module shoots out through the window cover component;
**characterized in that**
the laser line marking tool further includes a first sealing element, the first sealing element comprises a first connecting section and a second connecting section, the first connecting section is clamped between the assembly joint surface of the first shell and the second shell and extends in the direction of its extension, the second connecting section is clamped between the window cover component and the assembly joint surface of the first shell and the second shell and extends along its extension direction; the first sealing element is used to form a seal at the assembly joint surface of the first shell, the second shell and the window cover component.

2. The laser line marking tool as claimed in claim 1,
**characterized in that**
the first shell and the second shell are provided with a hollow area at a position corresponding to the window cover component, the first assembly joint surface of the first shell and the second shell is connected to the hollow area;
the window cover component includes a flat part, a projecting part and a hollow part on the side facing the first shell and second shell;
the flat part surrounds the projecting part;
the projecting part protrudes from the flat part and matches the shape of the hollow area, the projecting part extends into the hollow area when the window cover component is assembled and joined with the first shell and the second shell, the second connecting section is clamped between the projecting part and the first shell and second shell;
the hollow area is located in the middle of the projecting part.

3. The laser line marking tool as claimed in claim 2,
**characterized in that**
the second connecting section comprises a first connecting part and a second connecting part;
the first connecting part is located between the projecting part and the assembly joint surface of the first shell and the second shell and extends in the direction of its extension;
the second connecting part protrudes from the first connecting part and is located on the side of the first connecting part facing the flat part, and the second connecting part extends simultaneously in the direction of extension of the first connecting part.

4. The laser line marking tool as claimed in claim 3,
**characterized in that**,
the laser line marking tool further includes a second sealing element;
the second sealing element is provided around the projecting part and is located between the flat part and the first shell and the second shell;
the second connecting part is positioned against the second sealing element and is away from the side of the first connecting part.

5. The laser line marking tool as claimed in any one of the preceding claims,
**characterized in that**
a first groove matching the shape of the first connecting section is provided on the assembly joint surface of the first shell and assembly joint surface of the second shell; and/or;
a second groove matching the shape of the second connecting section is provided for the assembly joint surface of the first shell, the second shell and the window cover component.

6. The laser line marking tool as claimed in any one of the preceding claims,
**characterized in that**
the first shell and the second shell are fixedly connected by screws;
the first connecting section is provided with a fixing part, the fixing part is provided with a through hole matching the screw and for the screw to pass through.

7. The laser line marking tool as claimed in any one of the preceding claims,
**characterized in that**
the first sealing element is made of rubber.

8. The laser line marking tool as claimed in any one of the preceding claims,
**characterized in that**
the laser module comprises a pendulum and a laser tube;
the pendulum is fixedly provided between the first shell and the second shell, the laser tube extends from the pendulum into the window cover component;
the laser tube is provided with a laser light source and a cone prism, the laser light source irradiates vertically on the cone prism to form a 360-degree laser line and shoots out through the window cover component.

9. The laser line marking tool as claimed in any one of the preceding claims,
**characterized in that**
the laser line marking tool is a laser demarcation device.
